# FASCICULE DE BREVET EUROPEEN

(11) **EP 3 857 140 B1**
(45) Date de publication et mention de la délivrance du brevet: **21.06.2023**
(21) Numéro de dépôt: 19795282.3
(22) Date de dépôt: 26.09.2019
(51) Int. Cl.: F25B 41/00, B60K 11/04, H01M 10/625, B60L 58/26, B60K 11/02, B60K 1/00, F01P 3/18, B60L 1/02, B60L 58/24, H01M 10/6568

(54) **BOUCLE DE LIQUIDE CALOPORTEUR POUR VEHICULE**
WÄRMEÜBERTRAGUNGSFLÜSSIGKEITSKREISLAUF FÜR EIN FAHRZEUG
HEAT TRANSFER LIQUID LOOP FOR A VEHICLE

(30) Priorité: 26.09.2018 FR 1858792
(43) Date de publication de la demande: 04.08.2021
(73) Titulaire: VALEO SYSTEMES THERMIQUES, 78320 Le Mesnil Saint-Denis (FR)
(72) Inventeur: YAHIA, Mohamed, 78322 Le Mesnil Saint-Denis Cedex (FR)
(74) Mandataire: Valeo Systèmes Thermiques
(86) Numéro de dépôt international: PCT/FR2019/052277
(87) Numéro de publication internationale: WO 2020/065231

(56) Documents cités:
- EP-A2- 3 070 772
- DE-A1-102015 206 783
- FR-A1- 2 975 344

## Description

Le domaine de la présente invention est celui des systèmes de traitement thermiques pour véhicule électrique, notamment des boucles de liquide caloporteur impliquées dans le traitement thermique des éléments d'une chaîne de traction électrique de véhicule automobile.

Les véhicules automobiles électriques sont équipés de systèmes de traitement thermique utilisés pour refroidir différentes zones ou différents composants du véhicule. Il est notamment connu d'utiliser des fluides caloporteurs et des fluides réfrigérants pour refroidir les éléments d'une chaîne de traction électrique du véhicule. Les éléments de la chaîne de traction électrique visés sont un moteur électrique capable de mettre en mouvement le véhicule, un dispositif de stockage électrique utilisé pour fournir une énergie au moteur électrique ou encore une unité électronique participant au contrôle des éléments de la chaîne de traction électrique. Une telle utilisation des fluides caloporteurs est connue de chacun des documents DE 10 2015 206783 A1 et EP 3 070 772 A2.

Le véhicule automobile électrique bénéficie d'un apport en flux d'air extérieur lors de la phase de roulage. Ce flux d'air extérieur, capté en front de véhicule, participe avec d'autres fluides caloporteurs aux échanges thermiques réalisés au sein du système de traitement thermique. L'énergie thermique du flux d'air extérieur est ainsi utilisée pour refroidir un élément de la chaîne de traction électrique.

Le dispositif de stockage électrique est un élément de la chaîne de traction qu'il convient de traiter de façon différente selon les besoins, ces besoins étant variables. Le dispositif de stockage électrique subit un échauffement modéré lors de la phase de roulage. Son échauffement est sensiblement augmenté lors des phases de charge, et notamment en charge rapide. La charge rapide consiste à charger le dispositif de stockage électrique sous une tension et un ampérage élevés, de manière à charger le dispositif de stockage électrique en un temps court de quelques minutes. Cette charge rapide implique un échauffement important du dispositif de stockage électrique qu'il convient de refroidir.

L'unité électronique est un élément de la chaîne de traction sensible aux températures élevées. La tolérance de l'unité électronique est également en lien avec sa compacité : plus l'unité électronique est compacte plus sa sensibilité à la chaleur sera élevée. Classiquement, cet élément de la chaîne de traction se détériore lorsqu'il est soumis à des températures excédant 65°C. Or, dans le contexte de la chaîne de traction, ce niveau de température peut être facilement atteint, notamment en phase de charge rapide.

Il faut également considérer la possibilité que les occupants du véhicule restent à l'intérieur du véhicule tout ou partie du temps de charge mentionné ci-dessus. Il faut alors également traiter thermiquement l'habitacle pendant cette charge rapide pour maintenir des conditions de confort acceptables par les occupants. Ces deux demandes en refroidissement impliquent un dimensionnement du système qui le rend peu compatible avec les contraintes des véhicules automobiles actuels, notamment les véhicules mus par un moteur électrique.

Le problème technique réside donc dans la capacité à mutualiser les échanges thermiques des fluides parcourant le système de traitement thermique de sorte à limiter la consommation dudit système tout en traitant de façon appropriée les différents éléments et de la chaîne de traction électrique du véhicule et l'habitacle.

L'invention s'inscrit dans ce contexte et propose une solution technique, définie par la revendication indépendante 1 annexée, qui concoure à maintenir au moins le dispositif de stockage électrique et le moteur électrique en-dessous d'une température seuil, au moyen d'une boucle de liquide caloporteur astucieusement conçue pour dissiper des calories au générées par au moins deux éléments de la chaîne de traction électrique, simultanément, et malgré des besoins en refroidissement différents de ces deux éléments de la chaîne de traction électrique.

L'invention a donc pour objet une boucle de liquide caloporteur pour véhicule, comme définie par la revendication indépendante 1, la boucle de liquide caloporteur comprenant, entre autres, au moins un premier réseau et un deuxième réseau, le premier réseau comprenant au moins un moyen de mise en circulation du liquide caloporteur et un premier échangeur thermique configuré pour être couplé thermiquement à un premier élément d'un chaîne de traction électrique du véhicule, le deuxième réseau comprenant au moins un moyen de mise en mouvement du liquide caloporteur, un deuxième échangeur thermique configuré pour être couplé thermiquement à un deuxième élément de la chaîne de traction électrique du véhicule et un radiateur agencé pour être traversé par un flux d'air extérieur à un habitacle du véhicule, le radiateur comprenant au moins une entrée, une première zone de refroidissement du liquide caloporteur alimentant une première sortie du radiateur et une deuxième zone de refroidissement du liquide caloporteur alimentant une deuxième sortie du radiateur, la première sortie étant raccordée au premier échangeur thermique et la deuxième sortie étant raccordée au deuxième échangeur thermique.

Le premier réseau et le deuxième réseau sont organisés pour que le premier échangeur thermique et le deuxième échangeur thermique soient en parallèle l'un par rapport à l'autre dans la boucle selon l'invention.

Le raccordement de la première sortie du radiateur au premier échangeur thermique et le raccordement de la deuxième sortie du radiateur au deuxième échangeur thermique est direct, c'est-à-dire réalisé au moyen d'une conduite qui relie directement les composants concernés, oui indirect, c'est-à-dire par une conduite et par au moins un composant, par exemple le moyen de mise en circulation du liquide caloporteur.

Le premier élément de la chaîne de traction électrique est par exemple un dispositif de stockage électrique d'un moteur électrique. Le dispositif de stockage électrique peut être une batterie ou un pack de batteries, et est configuré pour fournir une énergie électrique au moteur électrique du véhicule.

Le deuxième élément de la chaîne de traction électrique est par exemple un moteur électrique capable de mettre en mouvement le véhicule. Le moteur électrique du véhicule est alors un moteur d'entraînement.

Selon l'invention, le premier réseau et le deuxième réseau bénéficient chacun du radiateur. Le premier réseau bénéficie de la première zone de refroidissement. Le deuxième réseau bénéficie de la deuxième zone de refroidissement. Le premier élément de la chaîne de traction électrique du premier réseau est configuré pour être traité thermiquement par le liquide caloporteur issu du radiateur, tout comme le deuxième élément de la chaîne de traction électrique du deuxième réseau, via respectivement le premier échangeur thermique et le deuxième échangeur thermique.

Selon l'invention, le radiateur est un échangeur de chaleur entre le liquide caloporteur et le flux d'air extérieur. Le radiateur comprend deux zones de refroidissement distinctes chacune reliée à une sortie distincte du radiateur. Elles sont aptes à générer deux températures de refroidissement différentes. Les températures de refroidissement différentes découlent par exemple d'un temps d'exposition entre le liquide caloporteur et le flux d'air extérieur différents dans l'une et l'autre zone de refroidissement. Un temps d'exposition plus long peut résulter d'une réduction du débit dans la zone ayant la plus forte température de refroidissement, ou par un dimensionnement différent ou une organisation différente générant un parcours plus long du liquide caloporteur au sein de la zone de refroidissement ayant la plus forte température de refroidissement.

La première zone de refroidissement du radiateur est raccordée au premier réseau via la première sortie du radiateur. La deuxième zone de refroidissement du radiateur est raccordée au deuxième réseau, via la deuxième sortie du radiateur. Les échanges thermiques réalisés dans le radiateur sont ainsi mutualisés pour pouvoir bénéficier au premier réseau et au deuxième réseau.

Le premier réseau et le deuxième réseau s'entendent comme être des réseaux de liquide caloporteur faits de conduites.

Selon un aspect de l'invention, la première zone de refroidissement est apte à générer une première température du liquide caloporteur et la deuxième zone de refroidissement est apte à générer une deuxième température du liquide caloporteur, la première température étant supérieure à la deuxième température. Dès lors, le premier échangeur thermique bénéficie d'un liquide caloporteur plus refroidi que le liquide caloporteur destiné au deuxième échangeur thermique.

Selon un aspect de l'invention, le premier réseau comprend un troisième échangeur thermique, et/ou un quatrième échangeur thermique, tous deux configurés pour être couplés thermiquement à un circuit de fluide réfrigérant, le troisième échangeur thermique et/ou le quatrième échangeur thermique étant disposés entre un premier point de raccordement et un deuxième point de raccordement.

Le troisième échangeur thermique et le quatrième échangeur thermique sont dédiés au traitement thermique du premier élément de la chaîne de traction électrique. Le troisième échangeur thermique et le quatrième échangeur thermique sont adaptés au traitement thermique du premier élément de la chaîne de traction électrique correspondant au dispositif de stockage électrique pour lequel est appliquée une charge rapide. Selon la puissance de refroidissement requise au niveau du dispositif de stockage électrique, l'un et ou l'autre du troisième échangeur thermique et du quatrième échangeur thermique peut être mis en oeuvre, et ce de façon ou non conjointe avec le radiateur.

Le troisième échangeur thermique et le quatrième échangeur thermique sont chacun individualisés, en ce sens qu'ils peuvent être positionnés dans le véhicule à des places distinctes, en étant physiquement distants l'un de l'autre.

Dans le premier réseau, le liquide caloporteur peut être refroidi grâce au fluide réfrigérant traversant le troisième échangeur thermique et/ou le quatrième échangeur thermique. Dans le deuxième réseau, le liquide caloporteur peut être refroidit grâce au flux d'air extérieur traversant le radiateur en phase de roulage du véhicule.

Dans la boucle de liquide caloporteur, le premier élément de la chaîne de traction électrique est refroidi par le radiateur et/ou le troisième échangeur thermique et/ou le quatrième échangeur thermique, via le premier échangeur thermique.

Selon un aspect de l'invention, le troisième échangeur thermique et le quatrième échangeur thermique sont en parallèles l'un par rapport à l'autre dans le premier réseau entre le premier point de raccordement et le deuxième point de raccordement.

Selon un aspect de l'invention, le deuxième réseau comprend un cinquième point de raccordement où se rejoignent une première voie et une deuxième voie disposées en parallèle l'une de l'autre dans le deuxième réseau, la première voie s'étendant entre la première sortie du radiateur et le cinquième point de raccordement, et la deuxième voie s'étendant entre la deuxième sortie du radiateur et le cinquième point de raccordement.

Le cinquième point de raccordement est un point de convergence du liquide caloporteur issu de la première sortie et de la deuxième sortie du radiateur. Le cinquième point de raccordement alimente le deuxième échangeur thermique disposé entre le cinquième point de raccordement et l'entrée du radiateur. Le moyen de mise en mouvement est par exemple situé entre le cinquième point de raccordement et le deuxième échangeur thermique.

Selon un aspect de l'invention, le premier réseau et le deuxième réseau sont raccordés par une première conduite de raccordement qui s'étend d'un troisième point de raccordement, disposé dans la première voie, au deuxième point de raccordement. Le premier réseau et le deuxième réseau sont reliés entre eux de sorte à autoriser un échange de liquide caloporteur d'un réseau à l'autre.

La première conduite de raccordement est assimilée à une voie d'entrée ou de sortie du liquide caloporteur dans le premier réseau, depuis la première voie du deuxième réseau. Dans la première conduite de raccordement, le liquide caloporteur peut circuler alternativement dans les deux sens, depuis le troisième point de raccordement vers le deuxième point de raccordement et inversement.

Le troisième point de raccordement est un point de divergence du liquide caloporteur issu de la première zone de refroidissement. Il alimente d'une part le deuxième point de raccordement et d'autre part le cinquième point de raccordement.

Selon un aspect de l'invention, le deuxième réseau comprend un cinquième échangeur thermique configuré pour être couplé thermiquement à un troisième élément de la chaîne de traction électrique.

Le troisième élément de la chaîne de traction électrique est par exemple une unité électronique. L'unité électronique est un ensemble d'appareils électroniques ou de programmes, ou un module de cet ensemble, apte à contrôler au moins un des éléments de la chaîne de traction électrique du véhicule et/ ou au moins un des éléments de la boucle de liquide caloporteur et/ou au moins un des éléments du circuit de fluide réfrigérant. Par exemple, l'unité électronique pilote le moteur électrique ou le chargement/déchargement du dispositif de stockage électrique.

Selon un aspect de l'invention, le cinquième échangeur thermique est disposé entre le troisième point de raccordement le cinquième point de raccordement. Depuis le troisième point de raccordement, le liquide caloporteur peut s'orienter vers le cinquième échangeur thermique d'une part et vers le premier réseau d'autre part. Le troisième élément de la chaîne de traction est ainsi configuré pour être refroidi au moins par le radiateur.

Selon l'invention, le premier réseau et le deuxième réseau sont raccordés par une deuxième conduite de raccordement qui s'étend d'une vanne trois voies, disposée dans le premier réseau, à un quatrième point de raccordement compris dans le deuxième réseau entre l'entrée du radiateur et le deuxième échangeur thermique. La deuxième conduite de raccordement raccorde le premier réseau et le deuxième réseau. La deuxième conduite de raccordement est assimilée à une voie de sortie du liquide caloporteur depuis le premier réseau vers le deuxième réseau. Dans la deuxième conduite de raccordement, le liquide caloporteur circule dans un seul sens, depuis la vanne trois voies vers le quatrième point de raccordement.

La vanne trois voies est un point de divergence du liquide caloporteur. Le quatrième point de raccordement est un point de convergence du liquide caloporteur. La vanne trois voies est configurée pour autoriser et interdire au liquide caloporteur de circuler depuis le premier réseau vers le deuxième réseau. Cette circulation, depuis le premier réseau vers le deuxième réseau, se fait via la deuxième conduite de raccordement. Lorsque la vanne trois voies autorise cette circulation du liquide caloporteur, le liquide caloporteur est mutualisé dans le premier réseau et le deuxième réseau. Alors, le liquide caloporteur traverse la première conduite de raccordement et la deuxième conduite de raccordement.

Lorsque la deuxième conduite de raccordement interdit la circulation du liquide caloporteur depuis le premier réseau vers le deuxième réseau, le liquide caloporteur circule d'une part dans le premier réseau et d'autre part dans le deuxième réseau, sans qu'il y ait de circulation de liquide caloporteur entre eux. Le liquide caloporteur ne circule pas dans la deuxième conduite de raccordement ni dans la première conduite de raccordement. Le liquide caloporteur circule dans le premier réseau grâce au moyen de mise en circulation. Le liquide caloporteur circule dans le deuxième réseau grâce au moyen de mise en mouvement.

Selon un aspect de l'invention, le deuxième échangeur thermique est disposé entre le cinquième point de raccordement et le quatrième point de raccordement. Le deuxième échangeur thermique est ainsi apte à être alimenté par la première sortie et la deuxième sortie du radiateur.

Selon un aspect de l'invention, la vanne trois voies est disposée entre le premier point de raccordement et le premier échangeur thermique.

La vanne trois voies comprend une entrée et deux sorties pouvant être indépendamment ouvertes ou fermées. L'entrée de la vanne trois voies est raccordée au premier point de raccordement. Une première sortie de la vanne trois voies alimente le troisième échangeur thermique. Une deuxième sortie de la vanne trois voies alimente la deuxième conduite de raccordement.

Alternativement, la vanne trois voies comprend une entrée et deux sorties ayant des ouvertes et des fermetures interdépendantes.

Lorsque la première sortie de la vanne trois voies est fermée, le troisième échangeur thermique est inopérant. Lorsque la première sortie de la vanne trois voies est ouverte, le liquide caloporteur circule au travers du troisième échangeur thermique.

Lorsque la deuxième sortie de la vanne trois voies est fermée, la circulation entre le premier réseau et le deuxième réseau via la deuxième conduite de raccordement est interdite. Lorsque la deuxième sortie de la vanne trois voies est ouverte, la circulation entre le premier réseau et le deuxième réseau via la deuxième conduite de raccordement est autorisée.

Selon un aspect de l'invention, le moyen de mise en mouvement du liquide caloporteur génère un débit maximal de liquide caloporteur inférieur au débit maximal généré par le moyen de mise en circulation du liquide caloporteur. Lorsque la circulation de liquide caloporteur est interdite dans la deuxième conduite de raccordement, la circulation du liquide caloporteur est confinée dans le premier réseau d'une part et dans le deuxième réseau d'autre part. Par « confiner », on entend que le premier réseau et le deuxième réseau sont, dans le cas de figure d'une circulation interdite dans la deuxième conduite de raccordement, configurés pour bloquer ou limiter la circulation de liquide caloporteur dans la première conduite de raccordement. Les débits générés dans l'un et l'autre des réseaux contribuent à ce confinement.

Selon un aspect de l'invention, le premier réseau et le deuxième réseau sont raccordés par une troisième conduite de raccordement qui s'étend entre un sixième point de raccordement, disposé dans le premier réseau entre la vanne trois voies et le premier point de raccordement, et une valve trois voies, comprise dans le deuxième réseau entre le quatrième point de raccordement et le deuxième échangeur thermique. La troisième conduite de raccordement raccorde le deuxième réseau et le premier réseau. La deuxième conduite de raccordement est assimilée à une voie de sortie du liquide caloporteur depuis le deuxième réseau vers le premier réseau. Dans la troisième conduite de raccordement, le liquide caloporteur circule dans un seul sens, depuis la valve trois voies vers le sixième point de raccordement.

Selon un aspect de l'invention, la valve trois voies est disposée entre le quatrième point de raccordement et le deuxième élément de la chaîne de traction électrique.

Selon un aspect de l'invention, un clapet anti-retour est disposé entre le premier point de raccordement et le sixième point de raccordement. Le clapet anti-retour est disposé dans le premier réseau. Il impose un sens de circulation au liquide caloporteur dans le premier réseau, depuis le premier point de raccordement vers le sixième point de raccordement. La circulation du liquide caloporteur en sens inverse est interdite.

L'invention concerne également un système de traitement thermique d'un véhicule, le système étant destiné au traitement thermique d'au moins le premier élément de la chaîne de traction électrique et du deuxième élément de la chaîne de traction électrique, le système comprenant au moins la boucle de liquide caloporteur telle que décrit précédemment et un circuit de fluide réfrigérant dédié au traitement thermique du premier élément de la chaîne de traction électrique.

Le troisième échangeur thermique et/ou le quatrième échangeur thermique sont couplés à la fois à la boucle de liquide caloporteur et au circuit de fluide réfrigérant. Ils sont configurés pour traiter thermiquement, par le biais du fluide réfrigérant, au moins le premier élément de la chaîne de traction électrique, et ce grâce au premier échangeur thermique. Le troisième échangeur thermique et le quatrième échangeur thermique permettent l'un et l'autre un échange de calories entre le fluide réfrigérant et le liquide caloporteur.

Le circuit de fluide réfrigérant selon l'invention est un circuit fermé qui met en oeuvre un cycle thermodynamique. Le fluide réfrigérant est par exemple un fluide sous-critique, tel que celui connu sous la référence R134A ou R1234YF.

D'autres caractéristiques, détails et avantages de l'invention ressortiront plus clairement à la lecture de la description donnée ci-après à titre indicatif en relation avec des dessins dans lesquels :
- la figure 1 est une vue schématique d'une boucle selon l'invention dans un premier mode de réalisation,
- les figures 2 et 3 montrent la boucle de la figure 1 exploitée selon différents modes de fonctionnement consistant à refroidir des éléments d'une chaîne de traction électrique du véhicule,

- la figure 4 est une vue schématique d'une boucle selon l'invention dans un deuxième mode de réalisation,
- la figure 5 montre la boucle de la figure 4 exploitée selon un mode de fonctionnement consistant à refroidir les éléments de la chaîne de traction électrique du véhicule.

Il faut tout d'abord noter que les figures exposent l'invention de manière détaillée pour mettre en oeuvre l'invention, lesdites figures pouvant bien entendu servir à mieux comprendre l'invention, le cas échéant. Ces figures sont des représentations schématiques qui illustrent comment est réalisée la boucle, ce qui la compose et comment le liquide caloporteur circule en son sein. En particulier, la boucle selon l'invention comprend toutes les caractéristiques de la revendication indépendante 1 annexée, comprenant entre autres principalement des moyens de mise en circulation du liquide caloporteur dans la boucle, des échangeurs thermiques, un radiateur agencé pour être traversé par un flux d'air extérieur à un habitacle du véhicule, et des canalisations reliant chacun de ces composants.

Les termes amont et aval employés dans la description qui suit se réfèrent au sens de circulation du fluide considéré, c'est-à-dire du liquide caloporteur ou un flux d'air extérieur à l'habitacle du véhicule. Le liquide caloporteur est symbolisé par une flèche qui illustre le sens de circulation de ce dernier dans la canalisation considérée. Les traits pleins illustrent une portion de circuit où le liquide caloporteur circule, tandis que les traits pointillés montrent une absence de circulation du liquide caloporteur.

Les dénominations « principal », « premier/ère », « deuxième », etc... n'ont pas vocation à indiquer un niveau de hiérarchisation ou ordonnancer les termes qu'ils accompagnent. Ces dénominations permettent de distinguer les termes qu'ils accompagnent et peuvent être interverties sans que soit porté atteinte à la portée de l'invention.

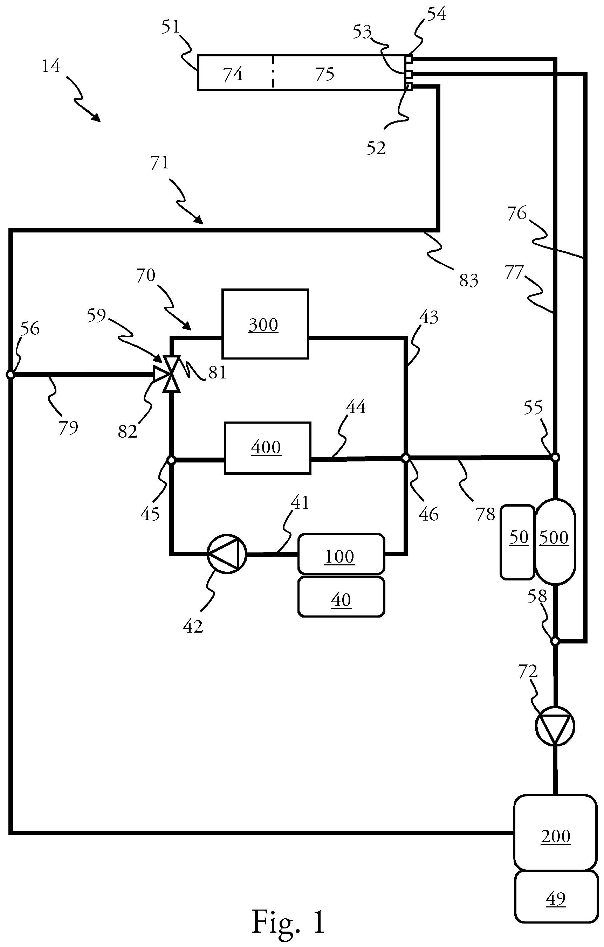

La figure 1 montre ainsi une boucle 14 de liquide caloporteur. Cette boucle 14 est fermée et comprend un premier réseau 70 et un deuxième réseau 71. Dans cette boucle 14, un liquide caloporteur peut être mis en circulation par un moyen de mise en circulation 42 et par un moyen de mise en mouvement 72. Le premier réseau 70 est une branche qui vient se raccorder sur le deuxième réseau 71.

Le moyen de mise en circulation 42 et le moyen de mise en mouvement 72 sont des dispositifs, tel qu'une pompe, apte à permettre la circulation du liquide caloporteur.

Le premier réseau 70 comprend au moins le moyen de mise en circulation 42 du liquide caloporteur et un premier échangeur thermique 100 dédié au traitement thermique d'un premier élément 40 de la chaîne de traction électrique du véhicule. Le circuit de fluide réfrigérant est ici non représenté pour faciliter la lecture de la figure.

Le premier échangeur thermique 100 est couplé thermiquement, de façon indirecte, au circuit de fluide réfrigérant par un troisième échangeur thermique 300 et/ou par un quatrième échangeur thermique 400. Le premier réseau 70 comprend ainsi le troisième échangeur thermique 300 et le quatrième échangeur thermique 400, qui couplent tous deux la boucle 14 de liquide caloporteur avec le circuit de fluide réfrigérant.

Le troisième échangeur thermique 300 et le quatrième échangeur thermique 400 sont en parallèle l'un par rapport à l'autre dans le premier réseau 70. Le troisième échangeur thermique 300 est disposé dans un premier conduit 43. Le quatrième échangeur thermique 400 est disposé dans un deuxième conduit 44. Le premier conduit 43 et le deuxième conduit 44 s'étendent chacun entre un premier point de raccordement 45 et un deuxième point de raccordement 46. Le premier conduit 43 et le deuxième conduit 44 sont raccordés entre eux par un conduit principal 41. Le conduit principal 41 s'étend entre le premier point de raccordement 45 et le deuxième point de raccordement 46. Le premier échangeur thermique 100 est disposé dans le conduit principal 41 du premier réseau 70. Le premier échangeur thermique 100 est en parallèle du troisième échangeur thermique 300 et du quatrième échangeur thermique 400.

Le troisième échangeur thermique 300 et le quatrième échangeur thermique 400 permettent l'un et l'autre un échange de calories entre le fluide réfrigérant et le premier élément 40 de la chaîne de traction électrique, indirectement via le premier échangeur thermique 100. Le premier élément 40 de la chaîne de traction électrique est utilisé pour fournir une énergie électrique à un moteur électrique 49 capable de mettre en mouvement le véhicule. Le premier élément 40 de la chaîne de traction électrique est un dispositif de stockage d'énergie électrique, par exemple une batterie ou un pack batterie.

Le moyen de mise en circulation 42 du liquide caloporteur est disposé entre le premier échangeur thermique 100 et le premier point de raccordement 45.

Le deuxième réseau 71 comprend au moins le moyen de mise en mouvement 72 du liquide caloporteur, un deuxième échangeur thermique 200 apte à traiter thermiquement le deuxième élément 49 de la chaîne de traction électrique et un radiateur 51 agencé pour être traversé par un flux d'air extérieur à un habitacle du véhicule. Du point de vue du liquide caloporteur, le deuxième échangeur thermique 200 est en aval du moyen de mise en mouvement 72 et est en amont du radiateur 51. Le radiateur 51 est agencé en face avant du véhicule pour pouvoir bénéficier du flux d'air extérieur en phase de roulage du véhicule. Le deuxième élément 49 de la chaîne de traction électrique est par exemple un moteur électrique de traction ou de propulsion du véhicule.

Le radiateur 51 est apte à générer deux niveaux de température du liquide caloporteur en son sein. Le radiateur 51 comprend pour ce faire une entrée 52, une première sortie 54 et une deuxième sortie 53, l'une et l'autre étant en parallèle. La deuxième sortie 53 est apte à dispenser le liquide caloporteur à un premier niveau de température et la première sortie 54 est apte à dispenser le liquide caloporteur à un deuxième niveau de température différent du premier niveau de température. La deuxième sortie 53 est apte à alimenter le deuxième élément 49 de la chaîne de traction électrique, bénéficiant du premier niveau de température. La première sortie 54 est apte à alimenter le premier échangeur thermique 100 et/ou un cinquième échangeur thermique 500, bénéficiant du deuxième niveau de température.

Le radiateur 51 comprend une première zone de refroidissement 74 du liquide caloporteur alimentant une première voie 77 du deuxième réseau 71. La première zone de refroidissement 74 alimente en liquide caloporteur la première sortie 54 du radiateur 51. La première zone de refroidissement 74 est affectée au traitement thermique d'au moins le premier élément 40 de la chaîne de traction électrique. La première zone de refroidissement 74 est apte à générer un refroidissement du liquide caloporteur plus important que la deuxième zone de refroidissement 75.

Le radiateur 51 comprend une deuxième zone de refroidissement 75 du liquide caloporteur alimentant le deuxième réseau 71 dans une deuxième voie 76 du deuxième réseau 71. La première voie 77 et la deuxième voie 76 du deuxième réseau 71 sont disposées en parallèle l'une par rapport à l'autre. La deuxième zone de refroidissement 75 alimente en liquide caloporteur la deuxième sortie 53 du radiateur 51. La deuxième zone de refroidissement 75 est affectée au traitement thermique du moteur électrique 49. La première zone de refroidissement 74 et la deuxième zone de refroidissement 75 sont configurées pour être traversées par le flux d'air extérieur.

Une première conduite de raccordement 78 raccorde le premier réseau 70 et le deuxième réseau 71. La première conduite de raccordement 78 s'étend entre un troisième point de raccordement 55, disposé dans la première voie 77 du deuxième réseau 71, et le deuxième point de raccordement 46, disposé dans le premier réseau 70. La première conduite de raccordement 78 est configurée pour que le liquide caloporteur y circule depuis le troisième point de raccordement 55 vers le deuxième point de raccordement 46.

Une deuxième conduite de raccordement 79 raccorde le premier réseau 70 et le deuxième réseau 71. La deuxième conduite de raccordement 79 s'étend entre une vanne trois voies 59, disposé dans le premier réseau 70, et un quatrième point de raccordement 56 compris dans le deuxième réseau 71. La valve trois voies 87 est configurée pour autoriser et interdire au liquide caloporteur de circuler depuis le premier réseau 70 vers le deuxième réseau 71. Le quatrième point de raccordement 56 est disposé entre le deuxième échangeur thermique 200 et le radiateur 51.

Dans le premier conduit 43, entre le premier point de raccordement 45 et le troisième échangeur thermique 300, on trouve la vanne trois voies 59. Cette vanne trois voies 59 est le dispositif permettant d'autoriser et d'interdire au liquide caloporteur de circuler depuis le premier réseau 70 vers le deuxième réseau 71.

La vanne trois voies 59 est un point où le liquide caloporteur 48 peut diverger. Une première sortie 81 de la vanne trois voies 59 est apte à alimenter le troisième échangeur thermique 300. Une deuxième sortie 82 de la vanne trois voies 59 est apte à alimenter la deuxième conduite de raccordement 79. La vanne trois voies 59 dispose de fonctions d'arrêt aptes à interdire et autoriser l'une et/ou l'autre de ces distributions. Autrement dit, une fonction d'arrêt équipe la première sortie 81 et la deuxième sortie 82 de la vanne trois voies 59.

Le deuxième réseau 71 se divise en voies 77, 76, 83. La première voie 77 et la deuxième voie 76 sont en série d'une troisième voie 83 s'étendant entre un cinquième point de raccordement 58 et l'entrée 52 du radiateur 51. La troisième voie 83 comprend le moyen de mise en mouvement 72, le deuxième élément 49 de la chaîne de traction électrique et le quatrième point de raccordement 56.

La première voie 77 et la deuxième voie 76 s'étendent entre le radiateur 51 et le cinquième point de raccordement 58. Elles sont parallèles entre elle entre le radiateur 51 et le cinquième point de raccordement 58. La première zone de refroidissement 74 du radiateur 51 alimente le premier réseau 70 via la première conduite de raccordement 78, et le deuxième réseau 71 via le cinquième point de raccordement 58. La première zone de refroidissement 74 et la deuxième zone de refroidissement 75 du radiateur 51 alimentent le deuxième échangeur thermique 200 via le cinquième point de raccordement 58.

Le deuxième réseau 71 comprend le cinquième échangeur thermique 500 dédié au traitement thermique d'un troisième élément 50 de la chaîne de traction électrique, par exemple une unité électronique. Le cinquième échangeur thermique 500 est disposé entre le troisième point de raccordement 55 et le cinquième point de raccordement 58. Ainsi, la première zone de refroidissement 74 du radiateur 51 alimente également le cinquième échangeur thermique 500. Dès lors, le premier élément 40 de la chaîne de traction électrique et le troisième élément 50 de la chaîne de traction électrique peuvent bénéficier tous deux d'un liquide caloporteur plus refroidi que le deuxième élément 49 de la chaîne de traction électrique.

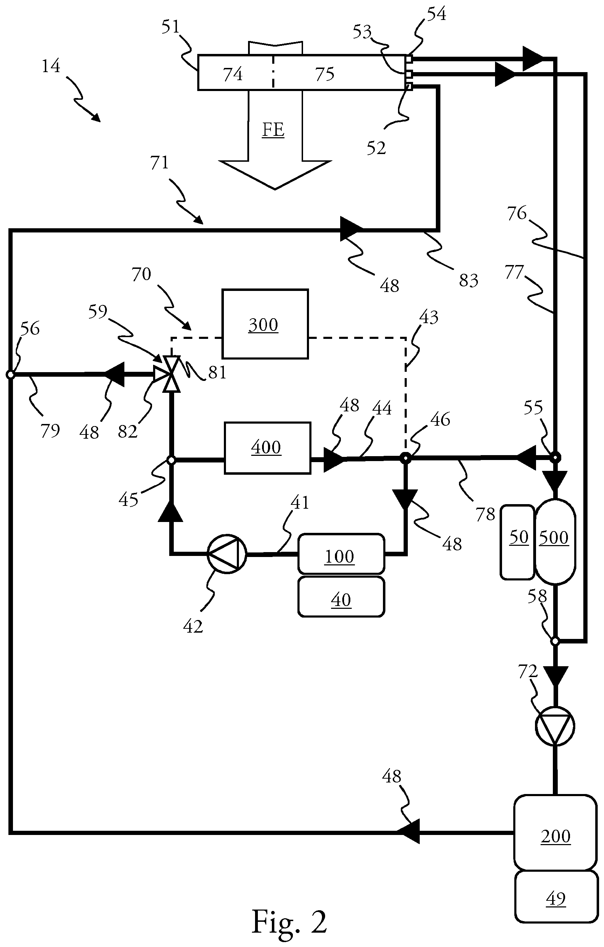

La figure 2 montre une situation où le véhicule est en phase de roulage avec un mode de fonctionnement dans lequel le liquide caloporteur 48 circule entre le premier réseau 70 et le deuxième réseau 71. Cette situation représente un refroidissement du premier élément 40 de la chaîne de traction électrique par le flux d'air extérieur FE, ne nécessitant pas le fonctionnement du troisième échangeur thermique 300 ou du quatrième échangeur thermique 400 rendus inopérants. Par exemple, ce mode de fonctionnement est possible lorsque l'air extérieur est à une température de 30°C et que le premier élément 40 de la chaîne de traction électrique est à une température de 45°C. Le circuit de fluide réfrigérant peut être sollicité en parallèle pour refroidir le premier élément 40 de la chaîne de traction électrique dans le cas où le refroidissement par le flux d'air extérieur FE n'est pas suffisant. Cette situation se présente par exemple lorsque le premier élément 40 de la chaîne de traction électrique est à une température plus élevée. Dans le mode de fonctionnement décrit en figure 2, le refroidissement du premier élément 40 de la chaîne de traction électrique par le radiateur 51 se fait au moyen de la première zone de refroidissement 74. L'énergie thermique dégagée, en phase de roulage, par le deuxième élément 49 de la chaîne de traction électrique est dissipée dans le flux d'air extérieur FE, via la deuxième zone de refroidissement 75.

Dans la figure 2, le liquide caloporteur 48 circule dans le premier réseau 70 par le conduit principal 41, depuis le moyen de mise en circulation 42. Au premier point de raccordement 45, le liquide caloporteur 48 se divise pour rejoindre d'une part la vanne trois voies 59, d'autre part le deuxième conduit 44.

Dans le deuxième conduit 44, le liquide caloporteur 48 traverse le quatrième échangeur thermique 400. Lorsque le quatrième échangeur thermique 400 n'est pas simultanément parcouru par le fluide réfrigérant, il n'y a pas d'échange thermique à ce niveau. Le liquide caloporteur 48 rejoint le deuxième point de raccordement 46 où il se mélange avec le liquide caloporteur 48 refroidi par le flux d'air extérieur FE issu de la première conduite de raccordement 78, comme décrit ci-après.

La vanne trois voies 59 a sa première sortie 81 fermée, interdisant la circulation du liquide caloporteur 48 dans le troisième échangeur thermique 300. La vanne trois voies 59 a sa deuxième sortie 82 ouverte, autorisant la circulation du liquide caloporteur 48 dans la deuxième conduite de raccordement 79. Ainsi, le liquide caloporteur 48 rejoint le quatrième point de raccordement 56 via la deuxième conduite de raccordement 79.

Depuis le quatrième point de raccordement 56, qui est un point de convergence entre le liquide caloporteur 48 issu du deuxième échangeur de chaleur 200 et celui issu de la deuxième conduite de raccordement 79, le liquide caloporteur 48 entre dans le radiateur 51 via sa première entrée 52.

Dans le radiateur 51, le liquide caloporteur 48 se réparti entre la première zone de refroidissement 74 et la deuxième zone de refroidissement 75.

Dans la première zone de refroidissement 74 et dans la deuxième zone de refroidissement 75, le liquide caloporteur 48 échange thermiquement avec le flux d'air extérieur FE qui traverse simultanément le radiateur 51. Le liquide caloporteur 48 est refroidi plus efficacement dans la première zone de refroidissement 74 par rapport au refroidissement qui se produit dans la deuxième zone de refroidissement 75.

Le liquide caloporteur 48 sort de la première zone de refroidissement 74 via la première sortie 54 du radiateur 51. Il rejoint alors le troisième point de raccordement 55. Au troisième point de raccordement 55, une partie du liquide caloporteur 48 est entrainé dans le premier réseau 70 par le moyen de mise en circulation 42. Au troisième point de raccordement 55, une autre partie du liquide caloporteur 48 est entrainée dans le deuxième réseau 71 par le moyen de mise en mouvement 72. Ainsi, le liquide caloporteur 48 le plus refroidi alimente, via la première conduite de raccordement 78 et le deuxième point de raccordement 46, le premier échangeur thermique 100 en intégrant le conduit principal 41. En parallèle, le liquide caloporteur 48 le plus refroidi alimente également le cinquième échangeur thermique 500 disposé dans la première voie 77 en aval du troisième point de raccordement 55. Le troisième élément 50 de la chaîne de traction électrique et le premier élément 40 de la chaîne de traction électrique sont ainsi refroidis. Depuis le cinquième échangeur thermique 500, le liquide caloporteur 48 rejoint le cinquième point de raccordement 58.

Le liquide caloporteur 48 sort de la deuxième zone de refroidissement 75 via la deuxième sortie 53 du radiateur 51. Il parcourt la deuxième voie 76 du deuxième réseau 71 jusqu'au cinquième point de raccordement 58. Le cinquième point de raccordement 58 est alors un point de mélange du liquide caloporteur 48 qui intègre ensuite le moyen de mise en mouvement 72. Puis, le liquide caloporteur 48 rejoint le deuxième échangeur thermique 200 de sorte à refroidir le deuxième élément 49 de la chaîne de traction électrique.

Dans l'exemple de la figure 2, le liquide caloporteur 48 ne circule pas entre la première sortie 81 de la vanne trois voies 59 et le deuxième point de raccordement 46.

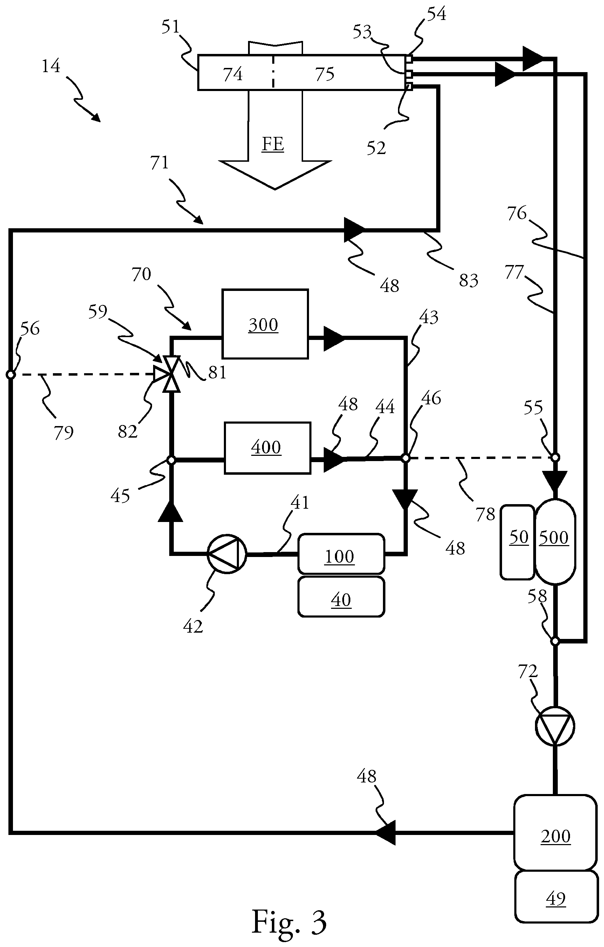

En se référant maintenant à la figure 3, on voit une situation où le véhicule est en phase de roulage avec un mode de fonctionnement dans lequel le liquide caloporteur 48 circule indépendamment dans le premier réseau 70, d'une part et dans le deuxième réseau 71, d'autre part. Lorsque la température du flux d'air extérieur FE est trop élevée, le refroidissement du premier élément 40 de la chaîne de traction électrique est assuré par le fluide réfrigérant traversant le troisième échangeur thermique 300 et/ou le quatrième échangeur thermique 400. Le refroidissement du deuxième élément 49 et du troisième élément 50 de la chaîne de traction électrique est réalisé par le flux d'air extérieur FE, à des niveaux de refroidissement différents. En effet, le deuxième échangeur 200 est alimenté par la première sortie 54 du radiateur 51, tandis que le cinquième échangeur de chaleur 500 est alimenté en liquide caloporteur par la deuxième sortie 53 du radiateur 51.

Dans le premier réseau 70, le liquide caloporteur 48 circule dans le conduit principal 41, dans le premier conduit 43 et dans le deuxième conduit 44, entrainé par le moyen de mise en circulation 42. Le premier point de raccordement 45 est un point de divergence du premier réseau 70, alimentant d'une part le troisième échangeur thermique 300 et d'autre part le quatrième échangeur thermique 400. Le deuxième point de raccordement 46 est un point de convergence du premier réseau 70, alimenté par le troisième échangeur thermique 300 et par le quatrième échangeur thermique 400.

Le quatrième échangeur thermique 400 est parcouru simultanément par le fluide réfrigérant à basse pression et basse température, et par le liquide caloporteur 48. Au sein du quatrième échangeur thermique 400 a lieu un échange thermique entre ce fluide réfrigérant et le liquide caloporteur 48, ce dernier étant refroidi. Le troisième échangeur thermique 300 peut être opéré de la même manière. Il peut également être rendu inopérant, aucun fluide réfrigérant ne le parcourant. Le liquide caloporteur 48 circule alors dans le premier conduit 43 sans bénéficier d'échange thermique.

Dans le deuxième réseau 71, le liquide caloporteur 48 circule dans la troisième voie 83, la première voie 77 et la deuxième voie 76, entrainé par le moyen de mise en mouvement 72. Le liquide caloporteur 48 circule dans le deuxième réseau 71 comme décrit en figure 2 et l'on pourra s'y reporter pour la compréhension et la mise en oeuvre de l'invention. Ainsi, la première zone de refroidissement 74 du radiateur 51 permet de refroidir le troisième élément 50 de la chaîne de traction électrique puis le deuxième élément 49 de la chaîne de traction électrique, et la deuxième zone de refroidissement 75 permet de renforcer le refroidissement du le deuxième élément 49 de la chaîne de traction électrique.

Dans l'exemple de la figure 3, le liquide caloporteur 48 ne circule pas dans la première conduite de raccordement 78 ni dans la deuxième conduite de raccordement 79, du fait de la fermeture de la deuxième sortie 82 de la vanne trois voies 59. Le liquide caloporteur 48 n'est pas divisé au troisième point de raccordement 55, et le quatrième point de raccordement 56 n'est pas un point de mélange.

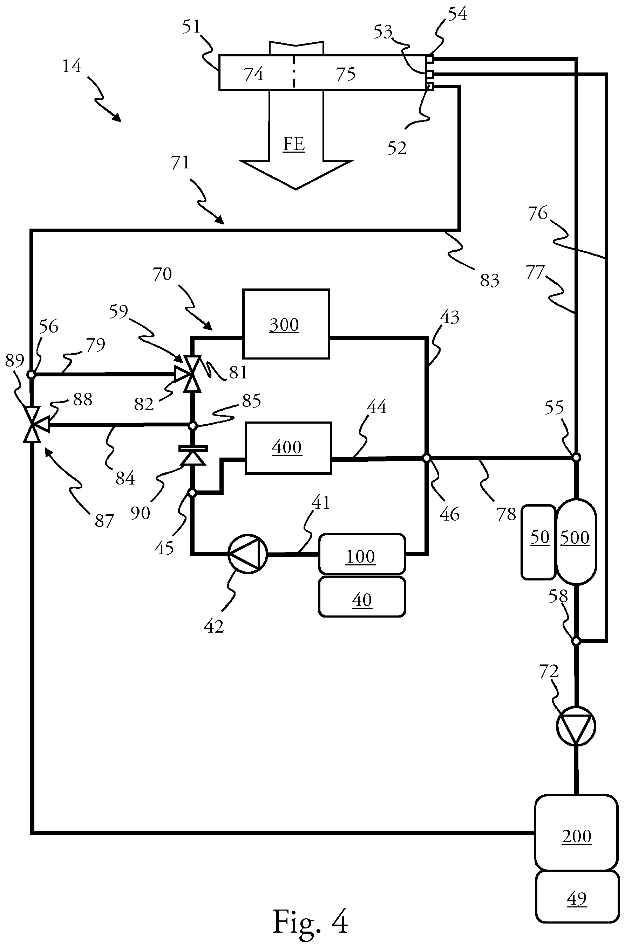

La figure 4 illustre un deuxième mode de réalisation de la boucle 14 de liquide caloporteur 48 selon une réalisation de l'invention, l'invention étant définie par la revendication indépendante 1.

Les différences vont être décrites ci-après par rapport à ce qui a été décrit à la figure 1. A l'exception de ces différences, la description de la figure 1 s'applique *mutatis-mutandis* et on pourra s'y reporter pour mettre en oeuvre l'invention décrite à la figure 4.

Dans l'exemple de la figure 4, la boucle 14 de liquide caloporteur comprend une troisième conduite de raccordement 84. La troisième conduite de raccordement 84 raccorde le premier réseau 70 au deuxième réseau 71. La troisième conduite de raccordement 84 s'étend entre un sixième point de raccordement 85 et une valve trois voies 87.

Le sixième point de raccordement 85 est compris dans le premier réseau 70. Le sixième point de raccordement 85 est disposé entre le premier point de raccordement 45 et le vanne trois voies 59. Le sixième point de raccordement 85 est disposé dans le premier conduit 43.

La valve trois voies 87 est comprise dans le deuxième réseau 71. La valve trois voies 87 est disposée entre le quatrième point de raccordement 56 et le deuxième échangeur thermique 200.

La valve trois voies 87 comprend une première sortie 88 et une deuxième sortie 89. La première sortie 88 alimente la troisième conduite de raccordement 84. La deuxième sortie 89 alimente le radiateur 51, via son entrée 52. La première sortie 88 et la deuxième sortie 89 disposent chacune d'une fonction d'arrêt. La valve trois voies 87 autorise ou interdit la sortie du liquide caloporteur 48 au niveau de sa première sortie 88, depuis le deuxième réseau 71 vers le premier réseau 70, et dans ce sens uniquement, depuis le valve trois voies 87 vers le sixième point de raccordement 85.

Un clapet anti-retour 90 est disposé entre le premier point de raccordement 45 et le sixième point de raccordement 85. Le clapet anti-retour 90 est disposé dans le premier conduit 43. Il impose un sens de circulation au liquide caloporteur 48 dans le premier conduit 43, depuis le premier point de raccordement 45 vers le sixième point de raccordement 85. La circulation du liquide caloporteur 48 en sens inverse est interdite par le clapet anti-retour 90.

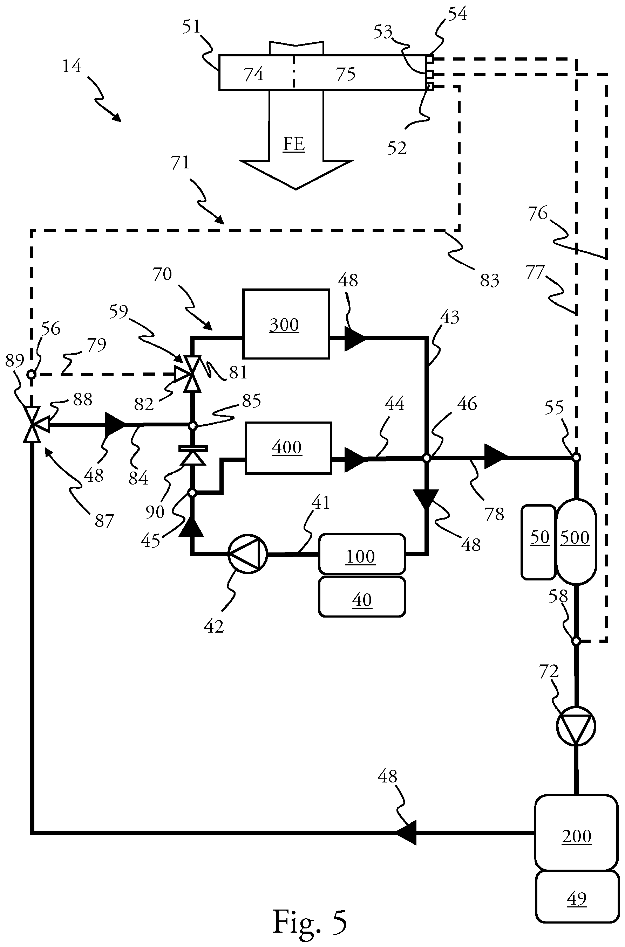

La figure 5 présente la boucle 14 de liquide caloporteur 48 dans un mode de récupération thermique s'affranchissant du radiateur 51. La boucle 14 fonctionne de sorte à homogénéiser le liquide caloporteur 48, participant ainsi à répartir les énergies thermiques et ce à faible coût énergétique, puisque la récupération thermique est passive. Cette boucle 14 de liquide caloporteur 48 est également apte à fonctionner en parallèle du quatrième échangeur thermique 400 opérant, c'est-à-dire dans un mode actif où le fluide réfrigérant basse température et basse pression traverse le quatrième échangeur thermique 400.

Le moyen de mise en circulation 42 entretient la circulation du liquide caloporteur 48 dans le premier réseau 70 au niveau du conduit principal 41, du premier conduit 43 et du deuxième conduit 44. Le sixième point de raccordement 85 est un point de convergence du liquide caloporteur 48.

Le moyen de mise en mouvement 72 met en circulation le liquide caloporteur 48 dans une partie de la troisième voie 83, de sorte à alimenter le deuxième échangeur thermique 200 et le premier réseau 70. En aval du deuxième échangeur thermique 200, le liquide caloporteur 48 est orienté par la valve trois voies 87 qui a sa première sortie 88 ouverte et sa deuxième sortie 89 fermée. Dès lors, le liquide caloporteur 48 intègre la troisième conduite de raccordement 84 et rejoint le sixième point de raccordement 85 dans le premier réseau 70.

Au deuxième point de raccordement 46, le liquide caloporteur 48 qui a convergé depuis le premier conduit 43 et le deuxième conduit 44, se réparti entre le conduit principal 41 et la première conduite de raccordement 78. Dans cet exemple de réalisation, le liquide caloporteur 48 circule dans la première conduite de raccordement 78 depuis le premier point de raccordement 45 jusqu'au troisième point de raccordement 55.

Entre le troisième point de raccordement 55 et le cinquième point de raccordement 58, le liquide caloporteur 48 circule dans la première voie 77 du deuxième réseau 71, avant de regagner le moyen de mise en mouvement 72.

Dans l'exemple de la figure 5, du fait de la fermeture de la deuxième sortie 89 de la valve trois voies 87, le liquide caloporteur 48 ne circule pas dans la première voie 77 ni dans la deuxième voie 76, ni dans une partie de la troisième voie 83 entre la deuxième sortie 89 de la valve trois voies 87 et l'entrée du radiateur 51, ni dans le radiateur 51. Il ne circule pas non plus dans la deuxième conduite de raccordement 79.

## Revendications

1. Boucle (14) de liquide caloporteur (48) pour un véhicule, la boucle (14) de liquide caloporteur (48) comprenant au moins un premier réseau (70) et un deuxième réseau (71), le premier réseau (70) comprenant au moins un moyen de mise en circulation (42) du liquide caloporteur (48) et un premier échangeur thermique (100) configuré pour être couplé thermiquement à un premier élément (40) d'un chaîne de traction électrique du véhicule, le deuxième réseau (71) comprenant au moins un moyen de mise en mouvement (72) du liquide caloporteur (48), un deuxième échangeur thermique (200) configuré pour être couplé thermiquement à un deuxième élément (49) de la chaîne de traction électrique du véhicule et un radiateur (51) agencé pour être traversé par un flux d'air extérieur (FE) à un habitacle du véhicule, le radiateur (51) comprenant au moins une entrée (52), une première zone de refroidissement (74) du liquide caloporteur (48) alimentant une première sortie (54) du radiateur (51) et une deuxième zone de refroidissement (75) du liquide caloporteur (48) alimentant une deuxième sortie (53) du radiateur (51), la première sortie (54) étant raccordée au premier échangeur thermique (100) et la deuxième sortie (53) étant raccordée au deuxième échangeur thermique (200), boucle (14) dans laquelle le premier réseau (70) et le deuxième réseau (71) sont raccordés par une deuxième conduite de raccordement (79) qui s'étend d'une vanne trois voies (59), disposée dans le premier réseau (70), à un quatrième point de raccordement (56) compris dans le deuxième réseau (71) entre l'entrée (52) du radiateur (51) et le deuxième échangeur thermique (200).

2. Boucle (14) de liquide caloporteur (48) selon la revendication 1, dans laquelle la première zone de refroidissement (74) est apte à générer une première température du liquide caloporteur (48) et la deuxième zone de refroidissement (75) est apte à générer une deuxième température du liquide caloporteur (48), la première température étant supérieure à la deuxième température.

3. Boucle (14) de liquide caloporteur (48) selon l'une quelconque des revendications précédentes, dans laquelle le premier réseau (70) comprend un troisième échangeur thermique (300) et/ou un quatrième échangeur thermique (400), tous deux configurés pour être couplés thermiquement à un circuit de fluide réfrigérant, le troisième échangeur thermique (300) et/ou le quatrième échangeur thermique (400) étant disposés entre un premier point de raccordement (45) et un deuxième point de raccordement (46).

4. Boucle (14) de liquide caloporteur (48) selon l'une quelconque des revendications précédentes, dans laquelle le deuxième réseau (71) comprend un cinquième point de raccordement (58) où se rejoignent une première voie (77) et une deuxième voie (76) disposées en parallèle l'une de l'autre dans le deuxième réseau (71), la première voie (77) s'étendant entre la première sortie (54) du radiateur (51) et le cinquième point de raccordement (58), et la deuxième voie (76) s'étendant entre la deuxième sortie (53) du radiateur (51) et le cinquième point de raccordement (58).

5. Boucle (14) de liquide caloporteur (48) selon les revendications 3 et 4, dans laquelle le premier réseau (70) et le deuxième réseau (71) sont raccordés par une première conduite de raccordement (78) qui s'étend d'un troisième point de raccordement (55), disposé dans la première voie (77), au deuxième point de raccordement (46).

6. Boucle (14) de liquide caloporteur (48) selon l'une quelconque des revendications précédentes, dans laquelle le deuxième réseau (71) comprend un cinquième échangeur thermique (500) configuré pour être couplé thermiquement à un troisième élément (50) de la chaîne de traction électrique.

7. Boucle (14) de liquide caloporteur (48) selon les revendications 4, 5 et 6, dans laquelle le cinquième échangeur thermique (500) est disposé entre le troisième point de raccordement (55) le cinquième point de raccordement (58).

8. Boucle (14) de liquide caloporteur (48) selon la revendication 3, dans lequel le premier réseau (70) et le deuxième réseau (71) sont raccordés par une troisième conduite de raccordement (84) qui s'étend entre un sixième point de raccordement (85), disposé dans le premier réseau (70) entre la vanne trois voies (59) et le premier point de raccordement (45), et un valve trois voies (88), comprise dans le deuxième réseau (71) entre le quatrième point de raccordement (56) et le deuxième échangeur thermique (200).

9. Système de traitement thermique d'un véhicule, le système étant destiné au traitement thermique d'au moins le premier élément (40) de la chaîne de traction électrique et du deuxième élément (49) de la chaîne de traction électrique, le système comprenant au moins la boucle (14) de liquide caloporteur (48) selon l'une quelconque des revendications précédentes et un circuit de fluide réfrigérant dédié au traitement thermique du premier élément (40) de la chaîne de traction électrique.

## Patentansprüche

1. Kreislauf (14) für Wärmeträgerflüssigkeit (48) für ein Fahrzeug, wobei der Kreislauf (14) für Wärmeträgerflüssigkeit (48) mindestens ein erstes Netz (70) und ein zweites Netz (71) umfasst, wobei das erste Netz (70) mindestens ein Mittel zum Umwälzen (42) der Wärmeträgerflüssigkeit (48) und einen ersten Wärmetauscher (100), der dazu ausgestaltet ist, mit einem ersten Element (40) eines elektrischen Traktionsstrangs des Fahrzeugs thermisch gekoppelt zu werden, umfasst, wobei das zweite Netz (71) mindestens ein Mittel zum Bewegen (72) der Wärmeträgerflüssigkeit (48), einen zweiten Wärmetauscher (200), der dazu ausgestaltet ist, mit einem zweiten Element (49) des elektrischen Antriebsstrangs des Fahrzeugs thermisch gekoppelt zu werden, und einen Kühler (51), der dazu eingerichtet ist, von einem Außenluftstrom (FE) eines Fahrgastraums des Fahrzeugs durchströmt zu werden, umfasst, wobei der Kühler (51) mindestens einen Einlass (52), eine erste Kühlzone (74) für die Wärmeträgerflüssigkeit (48), die einen ersten Auslass (54) des Kühlers (51) versorgt, und eine zweite Kühlzone (75) für die Wärmeträgerflüssigkeit (48), die einen zweiten Auslass (53) des Kühlers (51) versorgt, umfasst, wobei der erste Auslass (54) an den ersten Wärmetauscher (100) angeschlossen ist und wobei der zweite Auslass (53) an den zweiten Wärmetauscher (200) angeschlossen ist, wobei in dem Kreislauf (14) das erste Netz (70) und das zweite Netz (71) über eine zweite Anschlussleitung (79) angeschlossen sind, die sich von einem Dreiwegeventil (59), das in dem ersten Netz (70) angeordnet ist, zu einem vierten Anschlusspunkt (56) erstreckt, der in dem zweiten Netz (71) zwischen dem Einlass (52) des Kühlers (51) und dem zweiten Wärmetauscher (200) enthalten ist.

2. Kreislauf (14) für Wärmeträgerflüssigkeit (48) nach Anspruch 1, bei dem die erste Kühlzone (74) geeignet ist, eine erste Temperatur der Wärmeträgerflüssigkeit (48) zu erzeugen, und die zweite Kühlzone (75) geeignet ist, eine zweite Temperatur der Wärmeträgerflüssigkeit (48) zu erzeugen, wobei die erste Temperatur höher als die zweite Temperatur ist.

3. Kreislauf (14) für Wärmeträgerflüssigkeit (48) nach einem der vorhergehenden Ansprüche, bei dem das erste Netz (70) einen dritten Wärmetauscher (300) und/oder einen vierten Wärmetauscher (400) umfasst, die beide dazu ausgestaltet sind, mit einem Kältemittelkreis thermisch gekoppelt zu werden, wobei der dritte Wärmetauscher (300) und/oder der vierte Wärmetauscher (400) zwischen einem ersten Anschlusspunkt (45) und einem zweiten Anschlusspunkt (46) angeordnet sind.

4. Kreislauf (14) für Wärmeträgerflüssigkeit (48) nach einem der vorhergehenden Ansprüche, bei dem das zweite Netz (71) einen fünften Anschlusspunkt (58) umfasst, an dem sich ein erster Weg (77) und ein zweiter Weg (76) treffen, die parallel zueinander in dem zweiten Netz (71) angeordnet sind, wobei sich der erste Weg (77) zwischen dem ersten Auslass (54) des Kühlers (51) und dem fünften Anschlusspunkt (58) erstreckt und wobei sich der zweite Weg (76) zwischen dem zweiten Auslass (53) des Kühlers (51) und dem fünften Anschlusspunkt (58) erstreckt.

5. Kreislauf (14) für Wärmeträgerflüssigkeit (48) nach den Ansprüchen 3 und 4, bei dem das erste Netz (70) und das zweite Netz (71) über eine erste Anschlussleitung (78) angeschlossen sind, die sich von einem dritten Anschlusspunkt (55), der in dem ersten Weg (77) angeordnet ist, zu dem zweiten Anschlusspunkt (46) erstreckt.

6. Kreislauf (14) für Wärmeträgerflüssigkeit (48) nach einem der vorhergehenden Ansprüche, bei dem das zweite Netz (71) einen fünften Wärmetauscher (500) umfasst, der dazu ausgestaltet ist, mit einem dritten Element (50) des elektrischen Antriebsstrangs thermisch gekoppelt zu werden.

7. Kreislauf (14) für Wärmeträgerflüssigkeit (48) nach den Ansprüchen 4, 5 und 6, bei dem der fünfte Wärmetauscher (500) zwischen dem dritten Anschlusspunkt (55) dem fünften Anschlusspunkt (58) angeordnet ist.

8. Kreislauf (14) für Wärmeträgerflüssigkeit (48) nach Anspruch 3, bei dem das erste Netz (70) und das zweite Netz (71) über eine dritte Anschlussleitung (84) angeschlossen sind, die sich zwischen einem sechsten Anschlusspunkt (85), der in dem ersten Netz (70) zwischen dem Dreiwegeventil (59) und dem ersten Anschlusspunkt (45) angeordnet ist, und einem Dreiwegeventil (88) erstreckt, das in dem zweiten Netz (71) zwischen dem vierten Anschlusspunkt (56) und dem zweiten Wärmetauscher (200) enthalten ist.

9. System zur thermischen Behandlung eines Fahrzeugs, wobei das System zur thermischen Behandlung mindestens des ersten Elements (40) des elektrischen Antriebsstrangs und des zweiten Elements (49) des elektrischen Antriebsstrangs bestimmt ist, wobei das System mindestens den Kreislauf (14) für Wärmeträgerflüssigkeit (48) nach einem der vorhergehenden Ansprüche und einen Kältemittelkreis zur thermischen Behandlung des ersten Elements (40) des elektrischen Antriebsstrangs umfasst.

## Claims

1. Loop (14) for heat-transfer liquid (48) for a vehicle, the loop (14) for heat-transfer liquid (48) comprising at least a first network (70) and a second network (71), the first network (70) comprising at least one means (42) for inducing circulation of the heat-transfer liquid (48), and a first heat exchanger (100) configured to be thermally coupled to a first element (40) of an electric drive train of the vehicle, the second network (71) comprising at least one means (72) for inducing movement of the heat-transfer liquid (48), a second heat exchanger (200) configured to be thermally coupled to a second element (49) of the electric drive train of the vehicle, and a radiator (51) arranged to be traversed by an outside air flow (FE) external to a cabin of the vehicle, the radiator (51) comprising at least one input (52), a first cooling zone (74) of the heat-transfer liquid (48) supplying a first output (54) of the radiator (51), and a second cooling zone (75) for the heat-transfer liquid (48) supplying a second output (53) of the radiator (51), the first output (54) being connected to the first heat exchanger (100), and the second output (53) being connected to the second heat exchanger (200), in which loop (14) the first network (70) and the second network (71) are connected by a second connection duct (79) which extends from a three-way valve (59), arranged in the first network (70), to a fourth connection point (56) contained in the second network (71) between the input (52) of the radiator (51) and the second heat exchanger (200).

2. Loop (14) for heat-transfer liquid (48) according to Claim 1, in which the first cooling zone (74) is able to generate a first temperature of the heat-transfer liquid (48), and the second cooling zone (75) is able to generate a second temperature of the heat-transfer liquid (48), the first temperature being higher than the second temperature.

3. Loop (14) for heat-transfer liquid (48) according to either one of the preceding claims, in which the first network (70) comprises a third heat exchanger (300) and/or a fourth heat exchanger (400), both being configured to be thermally coupled to a refrigerant circuit, the third heat exchanger (300) and/or the fourth heat exchanger (400) being arranged between a first connection point (45) and a second connection point (46).

4. Loop (14) for heat-transfer liquid (48) according to any one of the preceding claims, in which the second network (71) comprises a fifth connection point (58), where they meet a first path (77) and a second path (76) arranged in parallel to one another in the second network (71), the first path (77) extending between the first output (54) of the radiator (51) and the fifth connection point (58), and the second path (76) extending between the second output (53) of the radiator (51) and the fifth connection point (58).

5. Loop (14) for heat-transfer liquid (48) according to Claims 3 and 4, in which the first network (70) and the second network (71) are connected by a first connection duct (78) which extends from a third connection point (55), arranged in the first path (77), to the second connection point (46).

6. Loop (14) for heat-transfer liquid (48) according to any one of the preceding claims, in which the second network (71) comprises a fifth heat exchanger (500) configured to be thermally coupled to a third element (50) of the electric drive train.

7. Loop (14) for heat-transfer liquid (48) according to Claims 4, 5 and 6, in which the fifth heat exchanger (500) is arranged between the third connection point (55) the fifth connection point (58).

8. Loop (14) for heat-transfer liquid (48) according to Claim 3, in which the first network (70) and the second network (71) are connected by a third connection duct (84) which extends between a sixth connection point (85), arranged in the first network (70) between the three-way valve (59) and the first connection point (45), and a three-way valve (88) contained in the second network (71) between the fourth connection point (56) and the second heat exchanger (200).

9. Heat treatment system for a vehicle, the system being intended for the heat treatment of at least the first element (40) of the electric drive train and of the second element (49) of the electric drive train, the system comprising at least the loop (14) for heat-transfer liquid (48) according to any one of the preceding claims and a refrigerant circuit dedicated to the heat treatment of the first element (40) of the electric drive train.
